# EUROPÄISCHE PATENTSCHRIFT

(11) **EP 2 912 084 B1**
(45) Veröffentlichungstag und Bekanntmachung des Hinweises auf die Patenterteilung: **14.12.2016**
(21) Anmeldenummer: 13776459.3
(22) Anmeldetag: 09.10.2013
(51) Int. Cl.: B05D 3/06, C08G 18/66, C08G 18/67, C08G 18/72, C08G 18/75, C08G 18/79, C08G 18/08, C08G 18/10, C08G 18/22, C08G 18/28, C08G 18/16, C08G 18/32, C08G 18/34, C08G 18/42, C09D 175/16

(54) **STRAHLUNGSHÄRTBARE WASSERDISPERGIERBARE POLYURETHAN(METH)ACRYLATE**
RADIATION-CURING, WATER-DISPERSIBLE POLYURETHANE (METH)ACRYLATES
(MÉTH)ACRYLATES DE POLYURÉTHANE RADIODURCISSABLES DISPERSIBLES DANS L'EAU

(30) Priorität: 24.10.2012 US 201261717644 P; 24.10.2012 EP 12189682
(43) Veröffentlichungstag der Anmeldung: 02.09.2015
(73) Patentinhaber: BASF SE, 67056 Ludwigshafen am Rhein (DE)
(72) Erfinder: BERGER, Sebastian, 48104 Ann Arbor (US); THÜRY, Peter, 67069 Ludwigshafen (DE); NEUMANN, Susanne, 67346 Speyer (DE); BECKER, Tanja, 67122 Altrip (DE); BECKER, Axel, 67122 Altrip (DE)
(74) Vertreter: BASF IP Association
(86) Internationale Anmeldenummer: PCT/EP2013/071071
(87) Internationale Veröffentlichungsnummer: WO 2014/063920

(56) Entgegenhaltungen:
- EP-A1- 0 026 313
- EP-A2- 1 106 633
- EP-A2- 1 914 253

## Beschreibung

Die vorliegende Erfindung beschreibt strahlungshärtbare, wasserdispergierbare Polyurethanacrylate mit guter Anfeuerung, deren Verwendung und das Verfahren zu deren Herstellung.

In Wasser dispergierbare Urethanacrylate sind bereits bekannt aus z.B. EP-A 98 752 oder DE-OS 2 936 039. Die Hydrophilie dieser bekannten Systeme basiert auf der Anwesenheit von ionischen Zentren, insbesondere von Carboxylat- oder Sulfonatgruppen, die als Gegenionen Alkalikationen oder Ammoniumionen aufweisen. Die oftmals vorliegenden Amine (zur Neutralisierung oder zum Molmassenaufbau) können eine Vergilbung der Lacke bewirken. Der angestrebte Molmassenaufbau ist jedoch erforderlich, um die Klebrigkeit der Filme herabzusetzen.

Strahlungshärtbare wasseremulgierbare Polyurethan(meth)acrylate sind beispielsweise bekannt aus EP 694531 A2, DE 19525489 A1, DE 19810793 A1, DE 19933012 A1, DE 19957604 A1 oder EP 1591502 A1.

Allen aus den genannten Schriften erhältlichen Produkten ist gemein, dass die Herstellung der darin beschriebenen Polyurethan(meth)acrylate die Umsetzung mit mindestens einem Di- oder Polyamin umfaßt.

DE 10 2010 003308 beschreibt wasseremulgierbare Urethan(meth)acrylate, bei denen auf die Zugabe von Aminen zur Kettenverlängerung verzichtet wird, um die Vergilbung zu verringern.

Nachteilig bei diesen Systemen ist deren geringe Anfeuerung auf Holzsubstraten, so dass Bedarf an weiteren wasserdispergierbaren Urethan(meth)acrylaten besteht, die eine gute Anfeuerung zeigen.

Aufgabe der vorliegenden Erfindung war es, strahlungshärtbare, wasserlösliche oder -dispergierbare Urethan(meth)acrylate zu entwickeln, die eine gute Anfeuerung, hohe optische Transparenz und zusätzlich noch einen sehr glatten Film bei Trocknung unter erhöhter Temperatur zeigen.

Die Aufgabe wurde gelöst durch Urethan(meth)acrylate (A), im Wesentlichen aufgebaut aus
(a) mindestens einem (cyclo)aliphatischen Di- und/oder Polyisocyanat,
(b1) mindestens einem (cyclo)aliphatischen Diol, mit einer Molmasse von weniger als 700 g/mol,
(b2) mindestens einem Polyesterdiol mit einer gewichtsmittleren Molmasse Mw von 700 bis 2000 und bevorzugt einer Säurezahl gemäß DIN 53240 von nicht mehr als 20 mg KOH/g,
(c) mindestens einer Verbindung (c) mit mindestens einer gegenüber Isocyanat reaktiven Gruppe und mindestens einer radikalisch polymerisierbaren ungesättigten Gruppe,
(d) mindestens einer Verbindung, die mindestens eine gegenüber Isocyanat reaktive Gruppe und mindestens eine Säuregruppe aufweist,
(e) mindestens eine Base für eine zumindest teilweise Neutralisation der Säuregruppen der Komponente (d), die ungleich den Komponenten (h1) und (h2) ist,
(f) optional mindestens ein Monoalkohol, der genau eine Hydroxyfunktion aufweist,
(g) optional mindestens einen monofunktionellen Polyalkylenoxidpolyetheralkohol,
(h1) mindestens einem mit einem oder zwei Kohlenwasserstoffresten substituierten Amin, in dem die Kohlenwasserstoffreste gemeinsam mindestens 12 Kohlenstoffatome aufweisen sowie
(h2) optional mindestens einer Verbindung mit mindestens zwei primären und/oder sekundären Aminogruppen.

Optional werden diese Urethan(meth)acrylate (A) mit mindestens einem niedermolekularen (Meth)acrylat (B) vermischt, das mindestens zwei, bevorzugt mindestens drei (Meth)acrylatfunktionen und ein mittleres Molekulargewicht bis zu 1000 g/mol, bevorzugt bis zu 750 g/mol aufweist,

Bevorzugt weist ein solches Gemisch aus (A) und (B) mindestens 1,0 mol, bevorzugt mindestens 1,5 und besonders bevorzugt mindestens 2,0 mol (Meth)acrylatfunktionen pro kg Festgehalt auf.

Die erfindungsgemäßen Urethan(meth)acrylate (A) zeigen auf Holzsubstraten eine gute Anfeuerung, eine gute Naßtransparenz und bilden glatte Filme bei Trocknung unter erhöhter Temperatur. Die Filme weisen eine hohe Fülle und optische Transparenz auf.

Mit besonderem Vorteil lassen sich die oben beschriebenen Urethan(meth)acrylat (A) und deren Gemische mit (B) als Beschichtungsmassen von Holz und holzhaltigen Substraten verwenden.

Bei der Komponente (a) handelt es sich mindestens ein, bevorzugt ein bis vier, besonders bevorzugt ein bis drei (cyclo)aliphatische Di- und/oder Polyisocyanate.

Dabei handelt es sich um Monomere und/oder Oligomere von aliphatischen oder cycloaliphatischen Diisocyanaten

Die NCO Funktionalität solcher Verbindung beträgt in der Regel mindestens 1,8 und kann bis zu 8 betragen, bevorzugt 1,8 bis 5 und besonders bevorzugt 2 bis 4.

Der Gehalt an Isocyanatgruppen, berechnet als NCO = 42 g/mol, beträgt in der Regel von 5 bis 25 Gew%.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanatte wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Es können auch Gemische der genannten Diisocyanate vorliegen.

Besonders bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan und ganz besonders bevorzugt sind Isophorondiisocyanat und Hexamethylendiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Es kommen auch höhere Isocyanate mit im Mittel mehr als 2 Isocyanatgruppen in Betracht. Dafür eignen sich beispielsweise Triisocyanate wie Triisocyanatononan.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate, Carbodiimid, hyperverzweigte Polyisocyanate, Polyurethan-Polyisocyanate-Präpolymere oder Polyharnstoff-Polyisocyanat-Präpolymere von geradlinigen oder verzweigten C₄-C₂₀-Alkylendiisocyanaten, cycloaliphatischen Diisocyanaten mit insgesamt 6 bis 20 C-Atomen.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische, im Rahmen dieser Schrift als (cyclo)aliphatisch zusammengefaßt, Di- und Polyisocyanate, z.B. die vorstehend genannten aliphatischen bzw. cycloaliphatischen Diisocyanate, oder deren Mischungen.

Für die vorliegende Erfindung können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer möglichen Ausführungsform der vorliegenden Erfindung weisen die Di- und Polyisocyanate (a) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Di- und Polyisocyanate (a) mit einem höheren Chlorgehalt eingesetzt werden.

Die Di- und Polyisocyanate (a) können auch zumindest teilweise in blockierter Form vorliegen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert-*Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxy-pivalinsäureneopentylglykolester, Ditrimethylolpropan, Dipentaerythrit, 2,2-Bis(4-hydro-xycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.

Die Polyisocyanate 1) bis 11) können im Gemisch, gegebenenfalls auch im Gemisch mit Diisocyanaten, eingesetzt werden.

In einer Ausführungsform der vorliegenden Erfindung handelt es sich bei der Komponente (a) um ein Gemisch eines aliphatischen Di- und/oder Polyisocyanats (a1) und eines cycloaliphatischen Di- und/oder Polyisocyanats (a2).

In einer bevorzugten Ausführungsform der vorliegenden Erfindung handelt es sich bei einer Komponente (a1) um 1,6-Hexamethylendiisocyanat als Diisocyanat und/oder ein darauf aufbauendes Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, ganz besonders bevorzugt handelt es sich bei dem Polyisocyanat auf Basis 1,6-Hexamethylendiisocyanat um dessen Isocyanurat.

In einer weiteren bevorzugten Ausführungsform handelt es sich bei der Komponente (a2) um Isophorondiisocyanat als Diisocyanat und/oder ein darauf aufbauendes Polyisocyanat, besonders bevorzugt um Isophorondiisocyanat als Diisocyanat.

In einer möglichen Ausführungsform enthalten die Polyurethane Allophanatgruppen, bevorzugt beträgt der Gehalt an Allophanatgruppen bei derartigen Polyurethanen (berechnet als C₂N₂HO₃ = 101 g/mol) 1 bis 28 Gew%, bevorzugt von 3 bis 25 Gew%.

Bei der Komponente (b1) handelt es sich um mindestens ein, bevorzugt ein bis drei, besonders bevorzugt ein bis zwei und ganz besonders bevorzugt genau ein (cyclo)aliphatisches, insbesondere aliphatisches Diol, mit einer Molmasse von weniger als 700 g/mol, bevorzugt weniger als 600, besonders bevorzugt weniger als 500 und ganz besonders bevorzugt weniger als 400 g/mol.

Unter einem cycloaliphatischen Diol werden dabei solche Diole verstanden, die mindestens ein gesättigtes Ringsystem enthalten.

Aliphatische Diole sind solche, die ausschließlich gerade oder verzweigte Ketten enthalten, also acyclische Verbindungen.

Beispiele für aliphatische Diole sind Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxid- oder Propylenoxid-Einheiten blockweise oder statistisch sein kann, Polytetramethylenglykole, Poly-1,3-Propandiole.

Bevorzugt eingesetzte Diole sind Ethylenglykol, 1,2-Propandiol, 1,3-Propandiol, 1,4-Butandiol, 1,5-Pentandiol, 1,6-Hexandiol und 1,8-Octandiol.

Beispiele für cycloaliphatische Diole sind 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane und Bis-(4-hydroxycyclohexan)isopropyliden.

Bevorzugt sind 1,2-, 1,3- und 1,4-Cyclohexandiol, 1,3- und 1,4-Bis(hydroxymethyl)cyclohexan und Bis-(4-hydroxycyclohexan)isopropyliden.

Bevorzugte Diole (b1) sind Ethylenglykol, 1,2-Propandiol, 1,3-Propandiol, 2,2-Dimethyl-1,2-Ethandiol, 2,2-Dimethyl-1,3-propandiol (Neopentylglykol), 1,2-Butandiol, 1,3-Butandiol, 1,4-Butandiol, 1,6-Hexandiol oder Diethylenglykol.

Besonders bevorzugte Verbindungen (b1) sind Ethylenglykol, 1,2-Propandiol, 1,3-Propandiol, Neopentylglykol, 1,4-Butandiol und Diethylenglykol.

Ganz besonders bevorzugte Verbindungen (b1) sind Ethylenglykol, Neopentylglykol und 1,4-Butandiol.

Bei der Komponente (b2) handelt es sich um mindestens ein, bevorzugt ein bis drei, besonders bevorzugt ein bis zwei und ganz besonders bevorzugt genau ein Polyesterdiol mit einer gewichtsmittleren Molmasse Mw von 700 bis 2000, bevorzugt 750 bis 1500 g/mol, bevorzugt mit einer Säurezahl gemäß DIN 53240 von nicht mehr als 20 mg KOH/g.

Bevorzugt handelt es sich dabei um ein Polyesterdiol, das zumindest teilweise aus aliphatischen Diol- und/oder Dicarbonsäurebausteinen aufgebaut ist. Derartige Polyesterdiole weisen eine höhere konformative Flexibilität auf als solche, die ausschließlich aus aromatischen und/oder cycloaliphatischen Bausteinen aufgebaut sind.

Bei den Dicarbonsäurebausteinen kann es sich um die freien Säuren oder deren Derivate handeln.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, *iso*-Propyl, n-Propyl, n-Butyl, *iso*-Butyl, *sek*-Butyl und *tert*-Butyl, bevorzugt Methyl, Ethyl und n-Butyl, besonders bevorzugt Methyl und Ethyl und ganz besonders bevorzugt Methyl.

Aliphatische Bausteine weisen lediglich offene Ketten, bevorzugt Alkylenketten auf, wohingegen cycloaliphatische Bausteine mindestens ein Ringsystem außerhalb der funktionellen Gruppen aufweisen. Aromatische Bausteine weisen mindestens ein aromatisches Ringsystem außerhalb der funktionellen Gruppen auf.

Beispiele für aliphatische Diole sind Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxid- oder Propylenoxid-Einheiten blockweise oder statistisch sein kann, Polytetramethylenglykole, Poly-1,3-Propandiole.

Bevorzugt eingesetzte Diole sind Ethylenglykol, 1,2-Propandiol, 1,3-Propandiol, 1,4-Butandiol, 1,5-Pentandiol, 1,6-Hexandiol und 1,8-Octandiol.

Beispiele für cycloaliphatische Diole sind 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane und Bis-(4-hydroxycyclohexan)isopropyliden.

Bevorzugt sind 1,2-, 1,3- und 1,4-Cyclohexandiol, 1,3- und 1,4-Bis(hydroxymethyl)cyclohexan und Bis-(4-hydroxycyclohexan)isopropyliden.

Beispiele für aliphatische Dicarbonsäuren sind Oxalsäure, Malonsäure, Maleinsäure, Fumarsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure und deren Derivate.

Beispiele für cycloaliphatische Dicarbonsäuren sind cis- und trans-Cyclohexan-1,2-di-carbonsäure (Hexahydrophthalsäuren), cis- und trans-Cyclohexan-1,3-dicarbonsäure, cis- und trans-Cyclohexan-1,4-dicarbonsäure, 1,2-, 1,3- oder 1,4-Cyclohex-4-endicarbonsäure (Tetrahydrophthalsäuren), cis- und trans-Cyclopentan-1,2-dicarbonsäure, cis- und trans-Cyclopentan-1,3-dicarbonsäure und deren Derivate.

Beispiele für aromatische Dicarbonsäuren sind Phthalsäure, Isophthalsäure, Terephthalsäure und Phthalsäureanhydrid, bevorzugt sind Phthalsäure und Isophthalsäure, besonders bevorzugt ist Phthalsäure.

Bevorzugte Polyesterdiole (b2) sind solche Polyesterdiole, in denen Diol- und/oder Dicarbonsäurekomponenten oder deren Derivate zu deren Herstellung zumindest teilweise aliphatisch sind, bevorzugt handelt es sich bei der Diolkomponente vollständig um eine aliphatische.

Bei der Komponente (c) handelt es sich um mindestens eine, bevorzugt 1 bis 3, besonders bevorzugt genau ein bis zwei und ganz besonders bevorzugt genau eine Verbindung mit mindestens einer, beispielsweise ein bis drei, bevorzugt ein bis zwei und besonders bevorzugt genau einer gegenüber Isocyanat reaktiven Gruppe und mindestens einer, beispielsweise ein bis fünf, bevorzugt ein bis drei, besonders bevorzugt ein oder zwei und ganz besonders bevorzugt genau einer radikalisch polymerisierbaren ungesättigten Gruppe.

Gegenüber Isocyanat reaktive Gruppen können z.B. sein -OH, -SH, -NH₂ und -NHR⁵, wobei R⁵ Wasserstoff oder eine 1 bis 4 Kohlenstoffatome enthaltende Alkylgruppe, wie z.B. Methyl, Ethyl, n-Propyl, *iso*-Propyl, n-Butyl, *iso*-Butyl, *sek*-Butyl oder *tert*-Butyl, bedeutet.

Gegenüber Isocyanat reaktive Gruppen können bevorzugt sein -OH, -NH₂ der -NHR⁵, besonders bevorzugt -OH oder -NH₂ und ganz besonders bevorzugt -OH.

Komponenten (c) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)-ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet, wenn auch weniger bevorzugt.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl-(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono-und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acrylamid, 2-Hydroxyethyl(meth)-acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl-(meth)acrylat sowie die Monoacrylate von Polyethylenglykol der Molmasse von 106 bis 238.

In einer bevorzugten Ausführungsform ist die Komponente (c) ausgewählt aus der Gruppe bestehend aus 2-Hydroxyethylacrylat, 2-Hydroxyethylmethacrylat, 2- oder 3-Hydroxypropylacrylat und 1,4-Butandiolmonoacrylat, 1,2- oder 1,3-Diacrylat von Glycerin, Trimethylolpropandiacrylat, Pentaerythrittriacrylat, Ditrimethylolpropantriacrylat und Dipentaerythritpentaacrylat, bevorzugt aus 2-Hydroxyethylacrylat und 2-Hydroxyethylmethacrylat und besonders bevorzugt handelt es sich um 2-Hydroxyethylacrylat.

Handelt es sich bei der Komponente (c) um technische Gemische der Acrylierung von Trimethylolpropan, Pentaerythrit, Ditrimethylolpropan oder Dipentaerythrit, so setzt man diese zumeist als Gemische vollständig und unvollständig acrylierter Polyole ein. Ganz besonders bevorzugt sind dann als Verbindungen (c) technische Gemische der Acrylierung von Pentaerythrit, die zumeist eine OH-Zahl gemäß DIN 53240 von 99 bis 115 mg KOH/g aufweisen und überwiegend aus Pentaerythrittriacrylat und Pentaerythrittetraacrylat bestehen, sowie untergeordnete Mengen von Pentaerythritdiacrylat enthalten können. Dies hat den Vorteil, daß Pentaerythrittetraacrylat nicht in das erfindungsgemäße Polyurethan (A) eingebaut wird, sondern gleichzeitig als Reaktivverdünner (B) fungiert.

In einer weiteren bevorzugten Ausführungsform handelt es sich bei der Komponente (c) um mindestens ein, bevorzugt 1 bis 2, besonders bevorzugt genau ein Epoxy-(meth)acrylat mit mindestens zwei, beispielsweise zwei bis vier, bevorzugt zwei bis drei und besonders bevorzugt genau zwei Hydroxyfunktionen und ebensovielen (Meth)acrylatfunktionen.

Epoxy(meth)acrylate sind erhältlich durch Umsetzung einer Epoxidgruppe mit (Meth)-acrylsäure unter Ausbildung einer β-Hydroxyalkyl(meth)acrylatgruppe.

Bevorzugt handelt es sich bei den Verbindungen (c) um Umsetzungprodukte von Glycidylethern mit (Meth)acrylsäure.

In Betracht kommen z.B. Glycidylether aliphatischer oder aromatische Polyole. Derartige Produkte werden im Handel in großer Zahl angeboten. Besonders bevorzugt sind Polyglycidylverbindungen vom Bisphenol A-, -F- oder-B-Typ, deren vollständig hydrierte Derivate und Glycidylether mehrwertiger Alkohole, z.B. des 1,4-Butandiol, 1,4-Cyclohexandimethanol, Neopentylglykol, des 1,6-Hexandiol, des Glycerin, Trimethylolpropan und des Pentaerythrit. Beispiele für derartige Polyepoxidverbindungen sind Epikote® 812 (Epoxidwert: ca. 0,67 mol/100g) und Epikote® 828 (Epoxidwert: ca. 0,53 mol/100g), Epikote® 1001, Epikote® 1007 und Epikote® 162 (Epoxidwert: ca. 0,61 mol/100g) der Firma Resolution Performance Products, Rütapox® 0162 (Epoxidwert: ca. 0,58 mol/100g), Araldit® DY 0397 (Epoxidwert: ca. 0,83 mol/100g) der Firma Vantico AG.

Besonders bevorzugt sind Bisphenol-A-diglycidylether und 1,4-Butandioldiglycidylether, ganz besonders bevorzugt Bisphenol-A-diglycidylether.

Insbesondere handelt es sich bei der Verbindung (c) um ein Epoxy(meth)acrylat der Formel 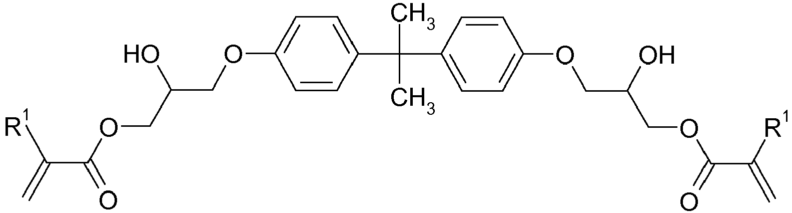 worin
R¹ Wasserstoff oder Methyl, bevorzugt Wasserstoff
bedeutet.

Bei der Komponente (d) handelt es sich um mindestens eine, bevorzugt genau eine Verbindung, die mindestens eine, beispielsweise ein oder zwei, bevorzugt genau zwei gegenüber Isocyanat reaktive Gruppen und mindestens eine Säuregruppe aufweist.

Unter Säuregruppen werden dabei Carbonsäure-, Sulfonsäure- oder Phosphonsäuregruppen, bevorzugt Carbonsäure- oder Sulfonsäuregruppen und besonders bevorzugt Carbonsäuregruppen verstanden.

Verbindungen (d) enthalten genau eine gegenüber Isocyanatgruppen reaktive Gruppe und mindestens eine anionische oder in eine anionische Gruppe überführbare hydrophile Gruppe. Dabei handelt es sich beispielsweise um solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.

Mögliche Verbindungen (d) sind solche mit der allgemeinen Formel

RG-R³-DG

worin
RG mindestens eine gegen Isocyanat reaktive Gruppe bedeutet,
DG mindestens eine dispergieraktive Gruppe und
R³ einen 1 bis 20 Kohlenstoffatome enthaltenden aliphatischen, cycloaliphatischen oder aromatischen Rest.

Beispiele für gegenüber Isocyanat reaktiven Gruppen RG sind -OH, -SH, -NH₂ oder - NHR⁵, worin R⁵ die oben angeführte Bedeutung hat, jedoch von dem dort verwendeten Rest verschieden sein kann, bevorzugt sind -OH, -NH₂ oder -NHR⁵, besonders bevorzugt sind sind -OH oder -NH₂, und ganz besonders bevorzugt ist -OH.

Beispiele für DG sind -COOH, -SO₃H oder -PO₃H sowie deren anionischen Formen, denen ein beliebiges Gegenion assoziiert sein kann, z.B. Li⁺, Na⁺, K⁺, Cs⁺, Mg²+, Ca²⁺ oder Ba²⁺. Weiterhin können als Gegenion die von Ammoniak oder Aminen, insbesondere tertiären Aminen, abgeleiteten Ammoniumionen oder quartäre Ammoniumionen, wie z.B. Ammonium, Methylammonium, Dimethylammonium, Trimethylammonium, Ethylammonium, Diethylammonium, Triethylammonium, Tributylammonium, Di-*iso-*Propyl-ethyl-ammonium, Benzyldimethylammonium, Monoethanolammonium, Diethanolammonium, Triethanolammonium, Hydroxyethyl-Dimethylammonium, Hydroxyethyl-Diethylammonium, Monopropanolammonium, Dipropanolammonium, Tripropanolammonium, Piperidinium, Piperazinium, N,N'-Dimethylpiperazinium, Morpholinium, Pyridinium, Tetramethylammonium, Triethylmethylammonium, 2-Hydroxyethyl-Trimethylammonium, Bis-(2-Hydroxyethyl)-dimethylammonium, Tris-(2-Hydroxyethyl)-methyl-ammonium, als Gegenion assoziiert sein.

R³ ist bevorzugt Methylen, 1,2-Ethylen, 1,2-Propylen, 1,3-Propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen.

Bei solchen Komponenten (d) handelt es sich z.B. um Hydroxyessigsäure, Weinsäure, Milchsäure, 3-Hydroxypropionsäure, Hydroxypivalinsäure, Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxybernsteinsäure, Hydroxydecansäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-alkylierte oder N-cycloalkylierte Aminopropan- oder -ethansulfonsäuren, beispielsweise N-Cyclohexylaminoethansulfonsäure oder N-Cyclohexylaminopropansulfon-säure, sowie deren Alkali- Erdalkali- oder Ammoniumsalze und besonders bevorzugt um die genannten Monohydroxycarbon- und -sulfonsäuren sowie Monoaminocarbon-und -sulfonsäuren.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Bevorzugt handelt es sich bei der Verbindung (d) um eine Verbindung mit genau zwei Hydroxygruppen und genau einer Säuregruppe, bevorzugt genau einer Carbonsäuregruppe.

Beispiele dafür sind Dimethylolpropionsäure, Dimethylolbuttersäure und Dimethylolpentansäure, bevorzugt sind Dimethylolpropionsäure und Dimethylolbuttersäure, eine besonders bevorzugte Verbindung (d) ist Dimethylolpropionsäure.

Bei der Komponente (e) handelt es sich um mindestens eine Base, die ungleich den Komponenten (h1) und (h2) ist, für eine zumindest teilweise Neutralisation der Säuregruppen der Komponente (d).

Als basische Verbindungen (e) kommen anorganische und organische Basen wie Ammonium-, Alkali- und Erdalkalihydroxide, -oxide, -carbonate, -hydrogencarbonate sowie Ammoniak oder tert. Amine, bevorzugt Alkalihydroxide in Betracht. Besonders bevorzugt ist die Teilneutralisation mit Natriumhydroxid oder Kaliumhydroxid. Die Mengen an eingeführten chemisch gebundenen Säuregruppen und das Ausmaß der Neutralisation der Säuregruppen (das meist bei 40 bis 80 mol% der Äquivalenzbasis beträgt) soll vorzugsweise hinreichend sein, um eine Dispergierung der Polyurethane in einem wässrigen Medium sicherzustellen, was dem Fachmann geläufig ist.

Bevorzugt handelt es sich jedoch bei der Verbindung (e) um Amine, besonders bevorzugt tertiäre Amine, beispielsweise Trimethylamin, Triethylamin, Tributylamin, Di-*iso-*Propyl-ethyl-amin, Benzyldimethylamin, Triethanolamin, Dimethyl ethanolamin, Diethyl ethanolamin, Methyl diethanolamin, Ethyl diethanolamin und Tripropanolamin.

Bevorzugt werden 50 bis 80 mol% der Säuregruppen aus (d) neutralisiert. Dies bewirkt eine monomodale Partikelgrößenverteilung der dispergierten Teilchen und erhöht die Stabilität der Dispersion.

Bei der optionalen Komponente (f) handelt es sich um mindestens einen Monoalkohol, der genau eine Hydroxyfunktion und darüber hinaus keine weitere funktionelle Gruppe aufweist.

Dabei handelt es sich bevorzugt um Monoole, besonders bevorzugt um Alkanole und ganz besonders bevorzugt um Alkanole mit 1 bis 20, bevorzugt 1 bis 12, besonders bevorzugt 1 bis 6, ganz besonders bevorzugt 1 bis 4 und insbesondere 1 bis 2 Kohlenstoffatome.

Beispiele dafür sind Methanol, Ethanol, *iso*-Propanol, n-Propanol, n-Butanol, *iso*-Butanol, *sek*-Butanol, *tert*-Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol, Cyclododecanol, Ethylenglykolmonomethylether, Ethylenglykolmonoethylether, Diethylenglykol, 1,3-Propandiolmonomethylether, bevorzugt sind Methanol, Ethanol, iso-Propanol, n-Propanol, n-Butanol, *tert*-Butanol, n-Hexanol, 2-Ethylhexanol, Cyclopentanol, Cyclohexanol, und Cyclododecanol, besonders bevorzugt sind Methanol, Ethanol, *iso*-Propanol, n-Propanol, n-Butanol und *tert*-Butanol, ganz besonders bevorzugt sind Methanol und Ethanol und insbesondere Methanol.

In einer bevorzugten Ausführungsform kann es sich bei den Monoolen um die genannten cycloaliphatischen Alkohole handeln, bevorzugt um Cyclopentanol oder Cyclohexanol, besonders bevorzugt um Cyclohexanol.

In einer weiteren bevorzugten Ausführungsform kann es sich bei den Monoolen um die genannten aliphatischen Alkohole mit 6 bis 20 Kohlenstoffatomen handeln, besonders bevorzugt um solche mit 8 bis 20 Kohlenstoffatomen, ganz besonders bevorzugt um solche mit 10 bis 20 Kohlenstoffatomen.

In einer besonders bevorzugten Ausführungsform handelt es sich bei den Monoolen um die genannten aliphatischen Alkohole handeln, ganz besonders bevorzugt um die mit 1 bis 4 Kohlenstoffatomen, insbesondere Methanol.

Die Funktion der Verbindungen (f) besteht darin, bei der Herstellung der Urethan(meth)acrylate (A) gegebenenfalls verbliebene, unumgesetzte Isocyanatgruppen abzusättigen.

Bei der optionalen Verbindung (g) handelt es sich um mindestens einen monofunktionellen Polyalkylenoxidpolyetheralkohol, wie er durch Alkoxylierung geeigneter Startermoleküle erhältlich ist.

Geeignete Startermoleküle zur Herstellung solcher Polyalkylenoxidpolyetheralkohole sind Thiolverbindungen, Monohydroxyverbindungen der allgemeinen Formel

R¹⁸-O-H

oder sekundäre Monoamine der allgemeinen Formel

R¹⁶R¹⁷N-H,

in welchen
R¹⁶, R¹⁷ und R¹⁸ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R¹⁶ und R¹⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R¹⁶, R¹⁷ und R¹⁸ unabhängig voneinander C₁- bis C₄-Alkyl, besonders bevorzugt sind R¹⁶, R¹⁷ und R¹⁸ Methyl.

Beispielsweise geeignete einwertige Startermoleküle können gesättigte, also keine C-C- oder C-Heteroatom-Doppel- oder -Dreifachbindungen enthaltenden, Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-Butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugt sind als Startermoleküle Alkohole mit nicht mehr als 6 Kohlenstoffatomen, besonders bevorzugt nicht mehr als 4 Kohlenstoffatomen, ganz besonders bevorzugt nicht mehr als 2 Kohlenstoffatomen und insbesondere Methanol.

Für die Alkoxylierungsreaktion geeignete Alkylenoxide sind Ethylenoxid, Propylenoxid, *iso*-Butylenoxid, Vinyloxiran und/oder Styroloxid, die in beliebiger Reihenfolge (zur Herstellung von Blockcopolymeren) oder auch im Gemisch (zur Herstellung von statistischen Copolymeren) bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül in einpolymerisierter Form auf, besonders bevorzugt mindestens 7 und ganz besonders bevorzugt mindestens 10.

Die einwertigen Polyalkylenoxidpolyetheralkohole weisen im statistischen Mittel in der Regel bis zu 90 Alkylenoxideinheiten, bevorzugt Ethylenoxideinheiten, pro Molekül in einpolymerisierter Form auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 500 insbesondere 1000 ± 500 g/mol und speziell 500 bis 1000 g/mol.

Bevorzugte Polyetheralkohole sind somit Verbindungen der Formel

R¹⁸-O-[-Xᵢ-]ₛ-H

worin
R¹⁸ die oben genannten Bedeutungen hat,
s für eine ganze Zahl von 2 bis 90, bevorzugt 5 bis 45, besonders bevorzugt 7 bis 40 und ganz besonders bevorzugt 10 bis 30 steht und
jedes Xᵢ für i = 1 bis s unabhängig voneinander ausgewählt sein kann aus der Gruppe bestehend
   aus -CH₂-CH₂-O-, -CH₂-CH(CH₃)-O-, -CH(CH₃)-CH₂-O-, -CH₂-C(CH₃)₂-O-, -C(CH₃)₂-CH ₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
   worin Ph für Phenyl und Vin für Vinyl steht.

Bei der Verbindung (h1) handelt es sich um mindestens ein, bevorzugt genau ein mit einem oder zwei Kohlenwasserstoffresten substituiertes Amin, in dem die Kohlenwasserstoffreste gemeinsam mindestens 12, bevorzugt mindestens 14, besonders bevorzugt mindestens 16, ganz besonders bevorzugt mindestens 20 und insbesondere mindestens 24 Kohlenstoffatome aufweisen.

Bei den Kohlenwasserstoffresten kann es sich um Alkyl, Aryl oder Cycloalkylreste handeln, bevorzugt um Alkyl oder Cycloalkyl und besonders bevorzugt um Alkyl.

Bei den Alkylresten handelt es sich um gegebenenfalls durch Alkyl oder Cycloalkyl substituiertes, bevorzugt unsubstituiertes C₁ - C₂₀-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Undecyl, Dodecyl, Tridecyl, Tetradecyl, Pentadecyl, Hexadecyl, Heptadecyl, Octadecyl oder Eicosyl, bevorzugt sind Octyl, Decyl, Undecyl, Dodecyl, Tridecyl, Tetradecyl, Pentadecyl, Hexadecyl, Heptadecyl, Octadecyl oder Eicosyl, besonders bevorzugt sind Dodecyl, Tridecyl, Tetradecyl, Pentadecyl, Hexadecyl, Heptadecyl, Octadecyl oder Eicosyl.

In einer bevorzugten Ausführungsform umfassen bei disubstituierten Aminen, besonders bei Dialkylaminen beide Kohlenwasserstoff- bzw. Alkylreste der Verbindung (h1) jeweils unabhängig voneinander mindestens sechs, bevorzugt mindestens acht, besonders bevorzugt mindestens zehn und ganz besonders bevorzugt mindestens zwölf Kohlenstoffatome.

Beispiele für Verbindungen (h1) sind Di-n-Hexylamin, Dicyclohexylamin, Diphenylamin, Phenyl cyclohexylamin, Phenyl benzylamin, Dibenzylamin, Benzyl phenethylamin, Bis-(1-Phenylethyl)amin, N-Benzyl-1-phenylethylamin, Di-n-Octylamin, Bis-2-Ethylhexylamin, Di-Decylamin, Di-Undecylamin, Mono-Dodecylamin, Di-Dodecylamin, Mono-Tridecylamin, Mono-Hexadecylamin (Cetylamin), Mono-Octadecylamin (Stearylamin), und Di-Tridecylamin.

Bei der Verbindung (h2) handelt es sich um mindestens eine, bevorzugt ein bis drei, besonders bevorzugt ein bis zwei und ganz besonders bevorzugt genau eine Verbindung mit mindestens zwei, bevorzugt zwei bis drei und besonders bevorzugt genau zwei primären Aminogruppen.

Verbindungen mit 2 primären Aminogruppen sind z.B. C₁-C₂₀-Alkylendiamine wie Ethylendiamin, 1,4-Butylendiamin, 1,5-Pentandiamin, Neopentandiamin oder Hexamethylendiamin.

Weiterhin genannt seien 4,9-Dioxadodecan-1,12-diamin, 4,7,10-Trioxatridecan-1,13-diamin, 4,4'-Diaminodicyclohexylmethan und Isophorondiamin.

Denkbar sind auch Verbindungen mit primären und sekundären Aminogruppen z.B. 3-Amino-1-methylaminopropan, Diethylentriamin, Triethylentetramin, Dipropylentriamin, N,N'-Bis(3-aminopropyl)-ethylendiamin.

Dabei bewirken Di- oder Polyamine einen Molmassenaufbau, der die Klebrigkeit der erhaltenen Beschichtungen verringert.

Denkbar ist es, das Urethan(meth)acrylat (A) mit mindestens einem niedermolekularen (Meth)acrylat (B) zu vermischen, bevorzugt erfolgt bereits bei der Herstellung des Urethan(meth)acrylats (A) in Gegenwart mindestens eines niedermolekularen (Meth)acrylats (B).

Bei dem niedermolekularen (Meth)acrylat (B) handelt es sich um mindestens eine strahlungshärtbare Verbindung, die neben radikalisch polymerisierbaren Acrylat- oder Methacrylatgruppen, bevorzugt Acrylatgruppen, keine gegenüber Isocyanat- oder Hydroxygruppen reaktiven Gruppen enthält und zudem eine niedrige Viskosität aufweist, bevorzugt von weniger als 150 mPas (in dieser Schrift wird die Viskosität bei 25 °C gemäß DIN EN ISO 3219/A.3 in einem Kegel-Platte-System mit einem Geschwindigkeitsgefälle von 1000 s⁻¹ angegeben, falls nicht anders vermerkt).

Die Verbindung (B) weist ein mittleres Molekulargewicht bis zu 1000, bevorzugt bis zu 750 g/mol auf. Bevorzugt handelt es sich um ein Polyether(meth)acrylat oder um ein (Meth)acrylat eines Di-, Tri- oder Tetraols.

Bevorzugte Verbindungen (B) weisen mindestens zwei, besonders bevorzugt mindestens drei (Meth)Acrylatgruppen auf.

In der Regel weisen die Verbindungen (B) bis zu sechs, bevorzugt bis zu vier (Meth)Acrylatgruppen auf.

Besonders bevorzugte Verbindungen (B) weisen einen Siedepunkt von mehr als 200 °C bei Normaldruck auf.

Bei den Verbindungen (B) kann es sich beispielsweise um Reaktivverdünner handeln, wie sie allgemein in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Diproyplengylkoldiacrylat, Tripropylenglykoldiacrylat, Trimethylolpropantriacrylat, Ditrimethylolpropantetraacrylat, Dipentaerythritpenta- oder -hexaacrylat, Pentaerythrittri- oder -tetraacrylat, Glycerindi- oder - triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000, Poly-1,3-Propandiol mit einer Molmasse zwischen 134 und 1178, Polyethylenglykol mit einer Molmasse zwischen 106 und 898, sowie Epoxy(meth)acrylate, Polyester(meth)acrylate, Polyether(meth)acrylate, Urethan-(meth)acrylate oder Polycarbonat(meth)acrylate, die optional auch mit einem oder mehreren Aminen modifiziert sein können.

Weitere Beispiele sind (Meth)Acrylate von Verbindungen der Formel (VIIIa) bis (VIIId), 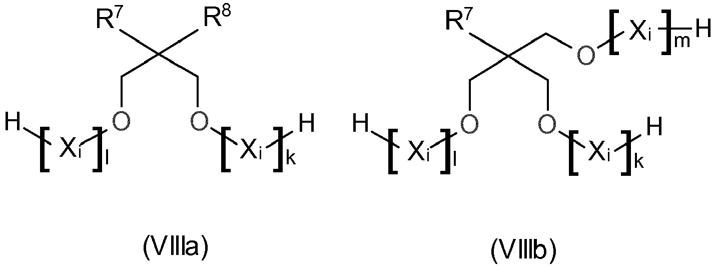 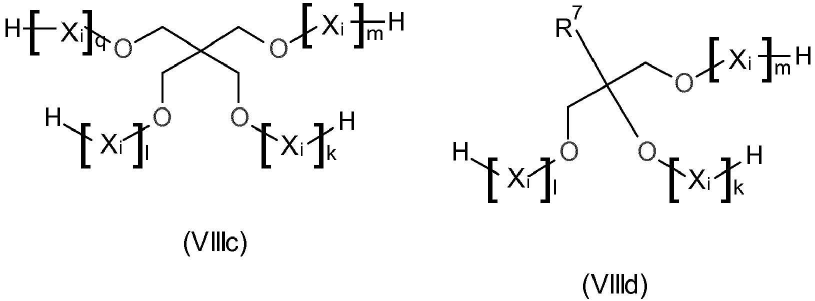 worin
R⁷ und R⁸ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, I, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
   worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind, 1,2-Propandioldiacrylat, 1,3-Propandioldiacrylat, Diproyplengylkoldiacrylat,Tripropylenglykoldiacrylat, Trimethylolpropantriacrylat, Ditrimethyloltetracrylat und Dipentaerithrolhexaacrylat, Polyesterpolyolacrylate, Polyetherolacrylate und Triacrylat von ein- bis zwanzigfach alkoxyliertem, besonders bevorzugt ein- bis 20fach ethoxyliertem Trimethylolpropan, ein- bis 20fach propoxyliertem Glycerin oder ein- bis 20fach ethoxyliertem und/oder propoxyliertem Pentaerythrit.

Ganz besonders bevorzugte multifunktionelle, polymerisationsfähige Verbindungen sind Trimethylolpropantriacrylat und Triacrylat von ein- bis zwanzigfach ethoxyliertem Trimethylolpropan, Triacrylat von ein- bis 20fach propoxyliertem Glycerin oder Tetraacrylat von ein- bis 20fach ethoxyliertem und/oder propoxyliertem Pentaerythrit.

Die Zusammensetzung der Urethan(meth)acrylate (A) ist in der Regel wie folgt:
(a) 100 mol% Isocyanatfunktionen in der Summe aus (a1) und (a2),
(b) 5 bis 35 mol% Hydroxyfunktionen in der Summe aus (b1) und (b2) (bezogen auf Isocyanatfunktionen in (a)), bevorzugt 15 bis 35 mol%,
(c) 20 bis 60 mol% Hydroxyfunktionen (bezogen auf Isocyanatfunktionen in (a)), bevorzugt 30 bis 50 mol%,
(d) 10 bis 30 mol% Hydroxyfunktionen (bezogen auf Isocyanatfunktionen in (a)), bevorzugt 15 bis 25 mol%,
(e) 40 bis 80 mol% Base (bezogen auf Säurefunktionen in (d)), bevorzugt 55 bis 80 mol%,
(f) 0 bis 10 mol%, bevorzugt 0 bis 5 mol%, besonders bevorzugt 0 mol% Hydroxyfunktionen (bezogen auf Isocyanatfunktionen in (a)),
(g) 0 bis 10 mol%, bevorzugt 0 bis 5 mol% Hydroxyfunktionen (bezogen auf Isocyanatfunktionen in (a)),
(h1) 1 bis 20 mol%, bevorzugt 1 bis 10 mol% sekundäre Aminofunktionen (bezogen auf Isocyanatfunktionen in (a)),
(h2) 1 bis 20 mol%, bevorzugt 1 bis 10 mol% primäre Aminofunktionen (bezogen auf Isocyanatfunktionen in (a)),
mit der Maßgabe, daß die Summe der gegen Isocyanat reaktiven Gruppen in den Komponenten (b), (c), (d), (f), (g), (h1) und (h2) 90 bis 100 mol% gegen Isocyanat reaktiven Gruppen, bevorzugt 95 bis 100 mol% und besonders bevorzugt 100 mol% (bezogen auf Isocyanatfunktionen in (a)) ergibt.

Dabei beträgt das Verhältnis von (a1) zu (a2) (bezogen auf die Menge der darin enthaltenen Isocyanatgruppen) von 4:1 bis 1:4, bevorzugt von 2:1 bis 1:4, besonders bevorzugt von 1:1 bis 1:3 und ganz besonders bevorzugt von 1:2 bis 1:3.

Es kann sinnvoll sein, die Komponente (a), die Isocyanatgruppen enthält, also die Summe der Komponenten (a1) und (a2), im Überschuß einzusetzen, beispielsweise bis zu 120 mol%, bevorzugt bis zu 115 mol% und besonders bevorzugt bis zu 110 mol%. Dies ist insbesondere dann bevorzugt, wenn mindestens eine der eingesetzten Komponenten, insbesondere die hygroskopische Verbindung (b), Wasser enthält, das mit Isocyanatfunktionen in Konkurrenz zu Hydroxyfunktionen reagiert.

Das niedermolekulare (Meth)acrylat (B) ist in der bis zu 3-fachen Gewichtsmenge des Urethan(meth)acrylats (A) anwesend, bevorzugt in der 0,1 bis 2-fachen Menge, besonders bevorzugt in der 0,1 bis 0,5-fachen Menge.

Erfindungsgemäß werden zur Herstellung des Urethan(meth)acrylats (A) von den Komponenten (a) bis (h1) zumindest die Komponenten (b) und (c) sowie gegebenenfalls (d) zumindest teilweise, bevorzugt vollständig vorgelegt und zu diesem Gemisch der vorgelegten Komponenten das Isocyanat (a) hinzugegeben.

Dazu legt man bevorzugt zumindest die Hälfte der geplanten Einsatzmenge an Komponente (b) vor, bevorzugt zumindest 65%, besonders bevorzugt zumindest 75% und insbesondere die vollständige Menge.

Weiterhin legt man bevorzugt zumindest die Hälfte der geplanten Einsatzmenge an Komponente (c) vor, bevorzugt zumindest 65%, besonders bevorzugt zumindest 75% und insbesondere die vollständige Menge.

Man legt bevorzugt zumindest die Hälfte der geplanten Einsatzmenge an Komponente (d) vor, bevorzugt zumindest 65%, besonders bevorzugt zumindest 75% und insbesondere die vollständige Menge.

Zu diesem Gemisch der Komponenten (b) und (c) sowie gegebenenfalls (d) wird dann das Isocyanat (a) hinzugegeben. Dies kann kontinuierlich, in mehreren Portionen oder in einer Zugabe erfolgen.

Die Komponenten (a1) und (a2) werden bevorzugt zumindest teilweise, bevorzugt vollständig gleichzeitig zugegeben, um im entstehenden Polyurethan (A) Domänen mit erhöhtem Anteil an (a1) oder (a2) zu vermeiden.

Das Reaktionsgemisch wird dann bei Temperaturen von 25 bis 100 °C, bevorzugt 40 bis 90 °C über einen Zeitraum von 3 bis 20 Stunden, bevorzugt von 5 bis 12 Stunden unter Rühren oder Umpumpen miteinander umgesetzt.

Während der Umsetzung kann die Temperatur gleichbleiben oder kontinuierlich oder stufenweise erhöht werden.

In der Regel wird die Komponente (h1) dann zugegeben, wenn die im Reaktionsgemisch befindlichen Komponenten im Wesentlichen abreagiert sind, beispielsweise zu mindestens 50, bevorzugt zu mindestens 75% abreagiert sind.

Ist eine Komponente (h2) zur Kettenverlängerung vorgesehen, so wird diese bevorzugt zugegeben, wenn das Reaktionsgemisch einen Rest-NCO-Wert von 1 % unterschritten hat. Anschließend lasst man noch für mindestens 15 Minuten, bevorzugt mindestens 30 Minuten und besonders bevorzugt mindestens 45 Minuten bei einer Temperatur von 40 bis 80 °C nachreagieren.

Die Umsetzung wird bevorzugt durch Zugabe eines geeigneten Katalysators beschleunigt. Solche Katalysatoren sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen. Bevorzugt handelt es sich dabei um Lewis-saure organische Metallverbindungen, für die z.B. Zinnverbindungen in Frage kommen, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat.

Auch Metallkomplexe wie Acetylacetonate des Eisens, Titans, Aluminiums, Zirkons, Mangans, Nickels, Zinks und Cobalts sind möglich.

Weitere Metallkatalysatoren werden von Blank et al. in Progress in Organic Coatings, 1999, Vol. 35, Seiten 19-29 beschrieben.

Als Zinn- und Zink-freie Alternativen werden u.a. Zirkonium-, Wismut-, Titan- und Aluminium-Verbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Aluminiumdionat (z.B. K-KAT® 5218 der Firma King Industries).

Als Zink- und Wismutverbindungen kommen dabei solche in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN-, NO₂⁻, NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Salze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Wismut-Katalysatoren sind die Wismut-carboxylate bevorzugt, besonders bevorzugt solche von Carboxylaten, die mindestens sechs Kohlenstoffatome aufweisen, insbesondere Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Unter den Titanverbindungen sind die Titan tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek-*Butanol, *tert*-Butanol, n-Hexanol, n-Heptanol, n-Octanol, bevorzugt sind Methanol, Ethanol, *iso*-Propanol, n-Propanol, n-Butanol, *tert*-Butanol, besonders bevorzugt sind iso-Propanol und n-Butanol.

Diese Katalysatoren sind für lösungsmittel-, wasser-basierte und/oder blockierte Systeme geeignet.

Molybdän-, Wofram- und Vanadium-Katalysatoren, werden insbesondere für den Umsatz blockierter Polyisocyanate unter WO 2004/076519 und WO 2004/076520 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat, Zirkon-2,2,6,6-tetramethyl-3,5-heptandionat sowie Wismut-2-ethylhexanoat.

Besonders bevorzugt sind jedoch Dibutylzinndilaurat, Wismut neodecanoat und Wismut-2-ethylhexanoat, ganz besonders bevorzugt sind Wismut neodecanoat und Wismut-2-ethylhexanoat.

Es ist möglich, die Wirkung der Katalysatoren zusätzlich durch Anwesenheit von Säuren zu verstärken, beispielsweise durch Säuren mit einem pKa-Wert von < 2,5, wie beschrieben in EP 2316867 A1 oder mit einem pKa-Wert zwischen 2,8 und 4,5, wie beschrieben in WO 04/029121 A1. Bevorzugt ist die Verwendung von Säuren mit einem pKa-Wert von nicht mehr als 4,8, besonders bevorzugt von nicht mehr als 2,5.

Es ist auch denkbar, die Reaktion ohne Katalysator durchzuführen, in diesem Fall muß das Reaktionsgemisch jedoch höheren Temperaturen und/oder längeren Reaktionszeiten ausgesetzt werden.

Um eine unerwünschte Polymerisierung der (Meth)acrylatgruppen während der Reaktion zu vermeiden, können Polymerisationsinhibitoren zugesetzt werden. Derartige Inhibitoren sind beispielsweise beschrieben in WO 03/035596, Seite 5, Zeile 35 bis Seite 10, Zeile 4, worauf hiermit im Rahmen der vorliegenden Offenbarung Bezug genommen sei.

Es kann eine bevorzugte Ausführungsform der vorliegenden Erfindung darstellen, einbaubare Polymerisationsinhibitoren, d.h. solche, die eine-OH oder -NH₂-Gruppe, d.h. eine gegenüber Isocyanat reaktive Gruppe, enthalten, einzusetzen. Ein bevorzugtes Beispiel dafür ist 4-Hydroxy-2,2,6,6-tetramethyl-piperidin-N-oxyl.

Die Reaktion kann als beendet gelten, wenn der NCO-Wert den theoretischen Umsatzwert zu mindestens 95%, bevorzugt zu mindestens 97% und besonders bevorzugt zu mindestens 98% erreicht hat.

Falls noch unumgesetzte Isocyanatgruppen anwesend sein sollten, so kann die Reaktion durch Umsetzung mit dem Monoalkohol (f) unter den obigen Reaktionsbedingungen vervollständigt werden.

Das Reaktionsgemisch wird nach der Herstellung in Wasser dispergiert oder verdünnt.

Meist wird dabei ein Festkörpergehalt von 35 bis 45 % eingestellt, dieser kann aber auch bis zu 60 % betragen.

Die mittlere Teilchengröße in der Dispersion beträgt in der Regel 10 bis 150 nm, bevorzugt 15 bis 120 nm, besonders bevorzugt 20 bis 100 nm, ganz besonders bevorzugt 20 bis 90 nm.

Die Reaktion kann bevorzugt in Anwesenheit des niedermolekularen (Meth)acrylats (B) erfolgen, der sowohl für die einzelnen Komponenten sowie für das Urethan(meth)acrylat (A) als Lösungsmittel fungiert als auch später in der Anwendung Bestandteil der Beschichtungsmasse ist.

Dazu kann die gesamte Menge der Verbindung (B) bereits zu Beginn der Reaktion vorgelegt werden oder im Verlauf der Reaktion zugegeben werden. Es kann aber auch sinnvoll sein, einen Teil des niedermolekularen (Meth)acrylats (B) erst nach Beendigung der Reaktion zuzugeben um das Urethan(meth)acrylat (A) weiter zu verdünnen.

Bevorzugt werden 30 bis 100% des insgesamt eingesetzten niedermolekularen (Meth)acrylats (B) bereits in der Reaktion eingesetzt, besonders bevorzugt 50 bis 100%, ganz besonders bevorzugt 70 bis 100% und insbesondere 100%. Der Rest kann dann nach Beendigung der Reaktion zugesetzt werden.

Das nach der erfindungsgemäßen Reaktionsführung erhaltene Urethan(meth)acrylat (A), optional in niedermolekularem (Meth)acrylat (B) gelöst, kann mit Vorteil als oder in strahlungshärtbaren Beschichtungsmassen eingesetzt werden.

Die Menge an Urethan(meth)acrylat (A) sollte so bemessen sein, dass das im Gemisch enthaltene niedermolekulare (Meth)acrylat (B) ebenfalls dispergiert wird.

Diese Beschichtungsmassen können weitere Bestandteile enthalten:
Sofern die Aushärtung der Beschichtungsmassen nicht mit Elektronenstrahlen, sondern mittels UV-Strahlung erfolgt, ist vorzugsweise wenigstens ein Photoinitiator enthalten, der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF AG), Ethyl-2,4,6-trimethylbenzoylphenylphosphinat (Lucirin® TPO L der BASF AG), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Di-ethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chlor-anthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Denkbar als Photoinitiatoren sind ebenfalls polymere Photoinitiatoren, wie beispielsweise der Diester von Carboxymethoxybenzophenon mit Polytetramethylenglykolen unterschiedlichen Molgewichts, bevorzugt 200 bis 250 g/mol (CAS 515136-48-8), sowie CAS 1246194-73-9, CAS 813452-37-8, CAS 71512-90-8, CAS 886463-10-1 oder weitere polymere Benzophenonderivate, wie sie beispielsweise unter dem Handelsnamen Omnipol® BP der Firma Rahn AG, Schweiz im Handel verfügbar sind.

In einer bevorzugten Ausführungsform werden als Photoinitiatoren Silsesquioxanverbindungen mit mindestens einer initiierend wirkenden Gruppe eingesetzt, wie sie beschrieben sind in WO 2010/063612 A1, dort besonders von Seite 2, Zeile 21 bis Seite 43, Zeile 9, was hiermit per Bezugnahme Bestandteil der vorliegenden Offenbarung sei, bevorzugt von Seite 2, Zeile 21 bis Seite 30, Zeile 5 sowie den in den Beispiele der WO 2010/063612 A1 beschriebenen Verbindungen.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Die Beschichtungsmassen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge des Urethan(meth)acrylats (A).

Die Beschichtungsmassen können weitere lackübliche Zusatzstoffe, wie Verlaufsmittel, Entschäumer, UV-Absorber, Farbstoffe, Pigmente und/oder Füllstoffe enthalten.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

Die erfindungsgemäßen Dispersionen eignen sich besonders als Beschichtungsmasse oder in Beschichtungsmassen, besonders bevorzugt zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Mit besonderem Vorteil können die erfindungsgemäßen Dispersionen eingesetzt werden zur Beschichtung von Holz und Holzwerkstoffen und holzhaltigen Substraten, wie Faserplatten. Denkbar wäre auch die Beschichtung von Cellulosefaser haltigen Substraten, wie beispielsweise Papier, Pappe oder Karton. Ganz besonders bevorzugt sind die Dispersionen geeignet zur Beschichtung von Eiche, Fichte, Kiefer, Buche, Ahorn, Nußbaum, Macore, Kastanie, Platane, Rubinie, Esche, Birke, Pinie und Ulme, sowie Kork.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die flüchtigen Bestandteile der Beschichtungsmassen entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 400g/m² , vorzugsweise 10 bis 200 g/m² und besonders bevorzugt 10 bis 80 g/m².

Gegebenenfalls kann, wenn mehrere Schichten des Beschichtungsmittels übereinander aufgetragen werden, nach jedem Beschichtungsvorgang eine Strahlungshärtung und ein Zwischenschliff erfolgen.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm². Bevorzugt sind Quecksilber-Niederdruckstrahler, - Mitteldruckstrahler mit Hochdruckstrahler, die optional mit Gallium oder Eisen dotiert sein können, sowie ferner LED-Strahler.

Die Bestrahlung kann gegebenenfalls auch unter Ausschluss von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In einem bevorzugten Verfahren erfolgt die Aushärtung kontinuierlich, indem man das mit der Beschichtungsmasse behandelte Substrat mit konstanter Geschwindigkeit an einer Strahlungsquelle vorbeiführt. Hierfür ist es erforderlich, dass die Aushärtungsgeschwindigkeit der Beschichtungsmasse ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der Beschichtungsmassen liegt darin, dass die beschichteten Holzsubstrate eine gute Nasstransparenz und eine hohe Anfeuerung zeigen. Gleichzeitig kann bei Trocknung bei erhöhter Temperatur eine sehr glatte Oberfläche erhalten werden. Die Filme weisen eine hohe Fülle und optische Transparenz auf.
Die Erfindung wird anhand der folgenden, nicht einschränkenden Beispiele näher erläutert.

### Beispiele

### Vergleichsbeispiel 1:

In einem Rührkessel wurden 34 Teile 2-Hydroxyethylacrylat; 73 Teile Lupraphen® VP 9184 (Polyesterdiol aufgebaut aus Adipinsäure, Isophthalsäure und Hexandiol mit einer OH-Zahl von 112 mg KOH/g); 294 Teile Laromer® LR 8986 (Epoxyacrylat mit einer mittleren OH-Zahl von 214 mg KOH/g und einer Doppelbindungsdichte von 3,8 mol/kg); 28 Teile Dimethylolpropionsäure; 24 Teile 1,4-Butandiol; 35 Teile Pluriol® A500E (Methylgekapptes monofunktionelles Polyethylenglykol mit einer OH-Zahl von 110 mg KOH/g; 188 Teile Basonat® I (Isophorondiisocyanat mit einem NCO-Äquivalenzgewicht von 111 g/mol); 66 Teile Basonat® HI 100 (Hexamethylendiisocyanat basiertes Polyisocyanat mit einer mittleren Funktionalität von 3 und einem NCO-Äquivalenzgewicht von 190 g/mol, 25 Teile HDI (Hexamethylendiisocyanat mit einem NCO-Äquivalenzgewicht von 84 g/mol); 0,4 Teile 2,6 Di-t-butyl-p-Kresol; 0,2 Teile 4-Hydroxy-Tempo und 135 Teile Aceton vorgelegt und bei Raumtemperatur 0,5 Teile BorchiKat® 24 (Bismuthcarboxylat) zugegeben. Es wurde auf 80 °C aufgeheizt und 8 Stunden bei 80 °C reagieren gelassen. Der NCO-Wert betrug 0,65%, bevor die Reaktionsmischung mit 200 Teilen Aceton verdünnt wurde. Man gab 17 Teile Triethylamin hinzu. Über 30 min wurde mit 1200 Teilen VE-Wasser (vollentsalztes Wasser) aufgefüllt und das Aceton im Vakuum abdestilliert. Der Feststoffgehalt der Dispersion wurde auf 41 % eingestellt. Die Viskosität der leicht bläulichen Dispersion betrug 26 mPa s, bei einer mittleren Teilchengröße von 92 nm.

### Vergleichsbeispiel 2:

Es wurde wie in Vergleichsbeispiel 1 verfahren, jedoch wurde der resultierende NCO-Wert 0,57% nach der Verdünnung mit Aceton mit 5 Teilen Dibutylamin und 7,5 Teilen Isophorondiamin gestoppt. Nach Neutralisation mit 17 Teilen Triethylamin wurde mit 1200 Teilen VE-Wasser aufgefüllt und das Aceton im Vakuum abdestilliert. Man erhielt eine Dispersion mit einem Feststoffgehalt von 39,1 %, einer Viskosität von 72 mPa s und einer mittleren Teilchengröße von 89 nm.

### Vergleichsbeispiel 3:

In einem 2 I Kolben, der mit Rückflusskühler, Rührer, Tropftrichter und Thermometer versehen war, wurden 427,1 g eines 45:55-Gemisches (w/w) von vollständig acryliertem, jeweils im statistischen Mittel 3,2-fach ethoxyliertem Trimethylolpropan und Bisphenol-A-diacrylat, 10,6 g Ethylenglykol, 50,2 g Dimethylolpropionsäure, 0,149 g 4-hydroxy-2,2,6,6-tetramethyl-piperidin-1-oxyl, 0,373 g Diphenylethen und 222,9 g Aceton bei 60[deg.]C vorgelegt und zum Rückfluss erhitzt. Als Katalysator wurden in die gut durchmischte Vorlage 0,72 g Borchi® Kat 24 (Bismut carboxylat, OMG Borchers GmbH, Langenfeld) zugegeben. Zu dieser Mischung wurden bei 60 bis 70[deg.]C gleichzeitig portionsweise 101,7 g Isophorondiisocyanat und 126,5 g Hexamethylen-diisocyanat innerhalb von 60 Minuten zugetropft. Bei Rückflusstemperatur wurde das Reaktionsgemisch so lange gerührt, bis der NCO-Wert des Reaktionsgemischs 0,42% betrug und gab weitere 179 g Aceton hinzu. Danach kühlte man auf 40[deg.]C ab und neutralisierte mit 102 g 10%-ig Natronlauge. Nach Abkühlen auf Umgebungstemperatur gab man die Polyurethanlösung unter starkem Rühren in 800 g Wasser, wobei spontan eine Dispersion entstand. Das Aceton wurde dann im Vakuum bei 40[deg.]C abdestilliert und die Dispersion abschliessend durch Verdünnen mit 300 g Wasser auf den gewünschten Feststoffgehalt eingestellt. Der Festkörpergehalt betrug 41%. Die Teilchengrösse Betrug 73 nm, die Viskosität betrug 57 mPa s und der pH-Wert 7,9.

Herstellen einer erfindungsgemäßen Polyurethanacrylatdispersion

### Beispiel 1:

Es wurde wie in Vergleichsbeispiel 1 verfahren, jedoch wurde der resultierende NCO-Wert von 0,63 % nach der Verdünnung mit Aceton mit 36 Teilen Ditridecylamin und 7,5 Teilen Isophorondiamin gestoppt. Nach Neutralisation mit 17 Teilen Triethylamin, Auffüllen mit 1250 Teilen VE-Wasser und Abdestillieren des Acetons im Vakuum erhielt man eine Dispersion mit einem Feststoffgehalt von 39,5 %, einer Viskosität von 58 mPa s und einer mittleren Teilchengröße von 99 nm.

### Beispiel 2:

Es wurde wie in Vergleichsbeispiel 1 verfahren, jedoch wurde der resultierende NCO-Wert von 0,56 % nach der Verdünnung mit Aceton mit 14 Teilen Ditridecylamin und 7 Teilen Isophorondiamin gestoppt. Nach Neutralisation mit 17 Teilen Triethylamin, Auffüllen mit 1200 Teilen VE-Wasser und Abdestillieren des Acetons im Vakuum erhielt man eine Dispersion mit einem Feststoffgehalt von 39,9 %, einer Viskosität von 440 mPa s und einer mittleren Teilchengröße von 54 nm.

### Beispiel 3:

Es wurde wie in Vergleichsbeispiel 1 verfahren, jedoch wurde der resultierende NCO-Wert von 0,59 % nach der Verdünnung mit Aceton mit 14 Teilen Ditridecylamin und 8 Teilen Isophorondiamin gestoppt. Nach Neutralisation mit 55 Teilen 10 %iger Natronlauge, Auffüllen mit 1200 Teilen VE-Wasser und Abdestillieren des Acetons im Vakuum erhielt man eine Dispersion mit einem Feststoffgehalt von 39,9 %, einer Viskosität von 92 mPa s und einer mittleren Teilchengröße von 75 nm.

### Herstellen von Filmen

Die Dispersionen bzw. Lösungen aus Beispiel 1 bis 7, sowie Vergleichsbeispiel 1 bis 3 wurden mit 4 Gew. % Photoinitiator Irgacure® 500 (Gemisch aus 50 Gew% 1-Hydroxy-cyclohexyl-phenyl-keton und 50 Gew% Benzophenon, BASF SE ehem. Ciba Spezialitätenchemie) versetzt und mittels eines 200µm-Kastenrakels auf ein vorgeschliffenes Holzsubstrat aufgetragen.

Es wurde 15 min bei Raumtemperatur und 30 min bei 60 °C im Umluftofen abgelüftet und in einer IST UV Anlage auf einem Transportband mit 10 m/min mit 2 UV Lampen (120W/cm, Quecksilbermitteldrucklampen) bestrahlt. Anschließend wurde zwischengeschliffen (160er Körnung) und erneut beschichtet (wie oben), getrocknet und UVgehärtet. Die Filme waren durchgehärtet (Fingernageltest) und zeigen eine niedrige Pendeldämpfung.

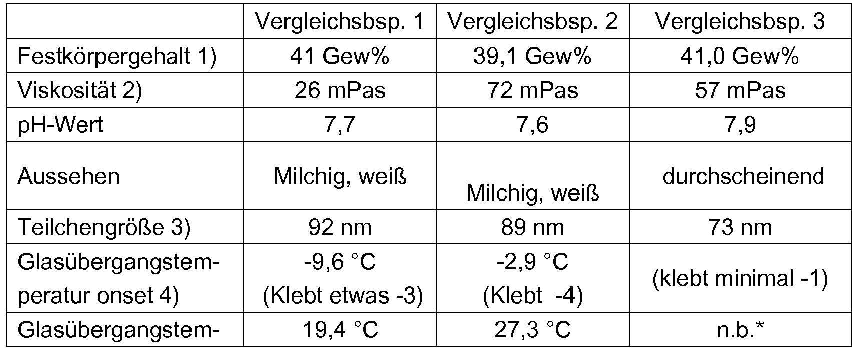

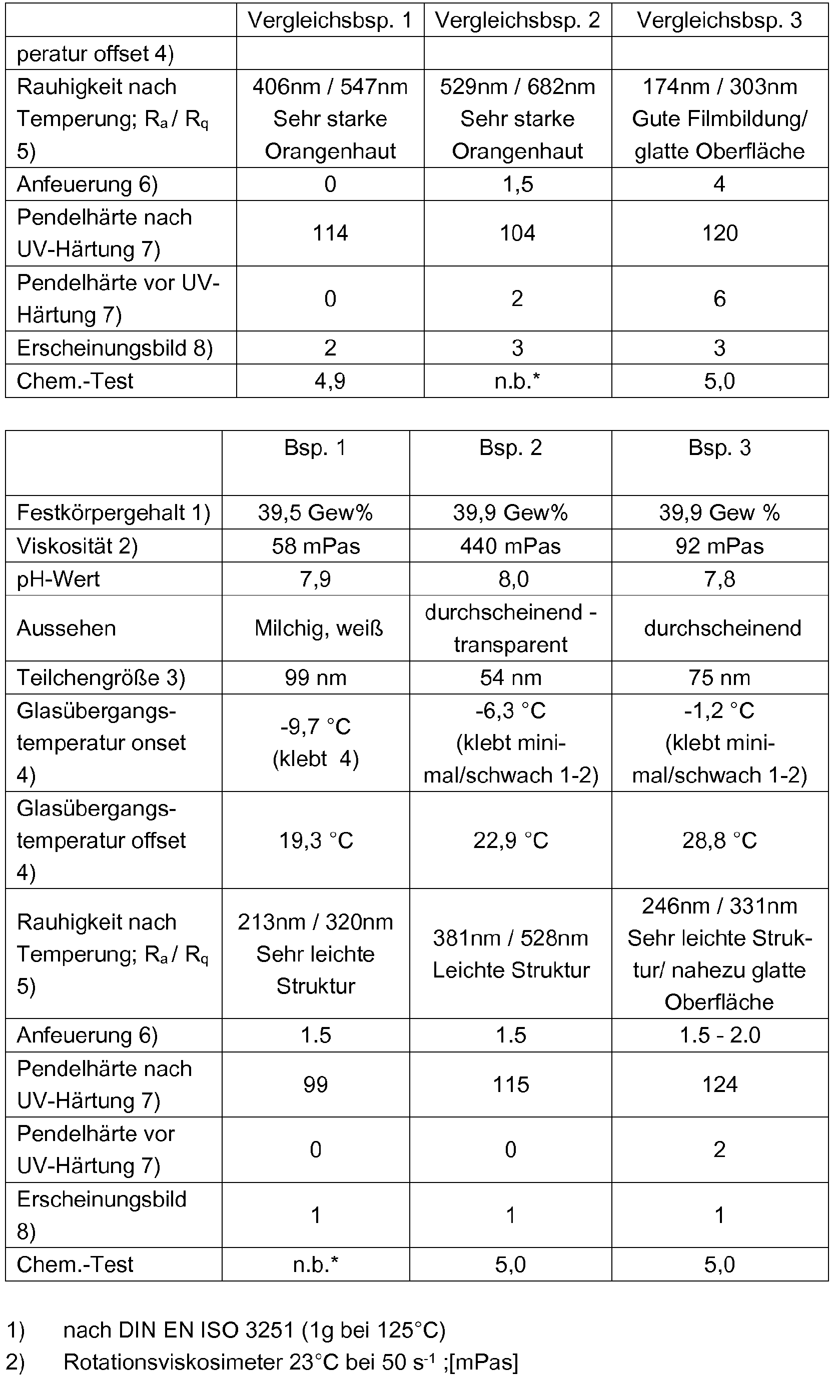

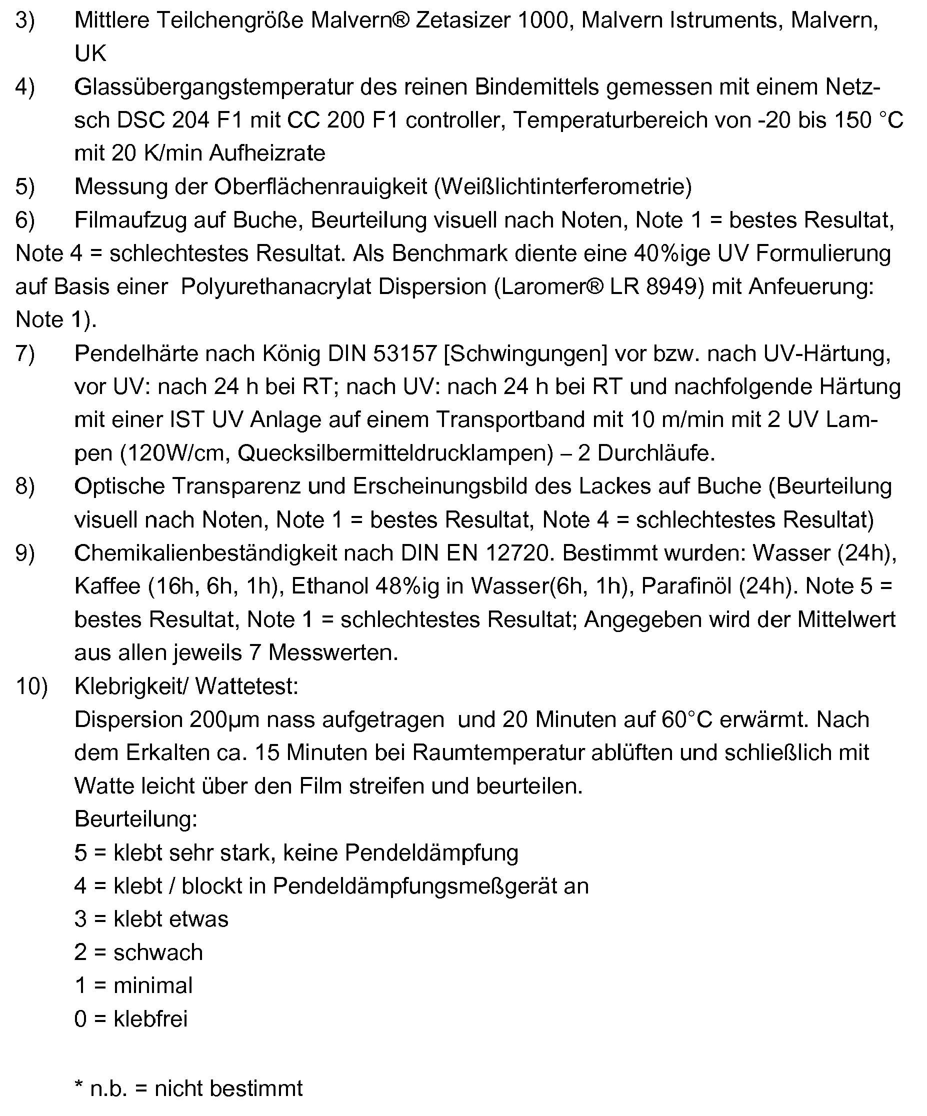

## Patentansprüche

1. Urethan(meth)acrylate (A), im Wesentlichen aufgebaut aus
(a) mindestens einem (cyclo)aliphatischen Di- und/oder Polyisocyanat,
(b1) mindestens einem (cyclo)aliphatischen Diol, mit einer Molmasse von weniger als 700 g/mol,
(b2) mindestens einem Polyesterdiol mit einer gewichtsmittleren Molmasse Mw von 700 bis 2000 und bevorzugt einer Säurezahl gemäß DIN 53240 von nicht mehr als 20 mg KOH/g,
(c) mindestens einer Verbindung (c) mit mindestens einer gegenüber Isocyanat reaktiven Gruppe und mindestens einer radikalisch polymerisierbaren ungesättigten Gruppe,
(d) mindestens einer Verbindung, die mindestens eine gegenüber Isocyanat reaktive Gruppe und mindestens eine Säuregruppe aufweist,
(e) mindestens eine Base für eine zumindest teilweise Neutralisation der Säuregruppen der Komponente (d), die ungleich den Komponenten (h1) und (h2) ist,
(f) optional mindestens ein Monoalkohol, der genau eine Hydroxyfunktion aufweist,
(g) optional mindestens einen monofunktionellen Polyalkylenoxidpolyetheralkohol,
(h1) mindestens einem mit einem oder zwei Kohlenwasserstoffresten substituierten Amin, in dem die Kohlenwasserstoffreste gemeinsam mindestens 12 Kohlenstoffatome aufweisen sowie
(h2) optional mindestens einer Verbindung mit mindestens zwei primären und/oder sekundären Aminogruppen.

2. Urethan(meth)acrylate gemäß Anspruch 1, **dadurch gekennzeichnet, daß** es sich bei Komponente (a) um ein Gemisch eines aliphatischen Di- und/oder Polyisocyanats (a1) und eines cycloaliphatisches Di- und/oder Polyisocyanats (a2) handelt.

3. Urethan(meth)acrylate gemäß Anspruch 1 oder 2, **dadurch gekennzeichnet, daß** Komponente (b1) ausgewählt ist aus der Gruppe bestehend aus Ethylenglykol, 1,2-Propandiol, 1,3-Propandiol, 2,2-Dimethyl-1,2-Ethandiol, 2,2-Dimethyl-1,3-propandiol (Neopentylglykol), 1,2-Butandiol, 1,3-Butandiol, 1,4-Butandiol, 1,6-Hexandiol und Diethylenglykol.

4. Urethan(meth)acrylate gemäß einem der vorstehenden Ansprüche, **dadurch gekennzeichnet, daß** es sich bei Komponente (b2) um ein Polyesterdiol handelt, das zumindest teilweise aus aliphatischen Diol- und/oder Dicarbonsäurebausteinen aufgebaut ist.

5. Urethan(meth)acrylate gemäß einem der Ansprüche 1 bis 4, **dadurch gekennzeichnet, daß** Komponente (c) ausgewählt aus der Gruppe bestehend aus 2-Hydroxyethylacrylat, 2-Hydroxyethylmethacrylat, 2- oder 3-Hydroxypropylacrylat und 1,4-Butandiolmonoacrylat, 1,2- oder 1,3-Diacrylat von Glycerin, Trimethylolpropandiacrylat, Pentaerythrittriacrylat, Ditrimethylolpropantriacrylat und Dipentaerythritpentaacrylat.

6. Urethan(meth)acrylate gemäß einem der Ansprüche 1 bis 4, **dadurch gekennzeichnet, daß** es sich bei der Verbindung (c) um ein Epoxy(meth)acrylat der Formel 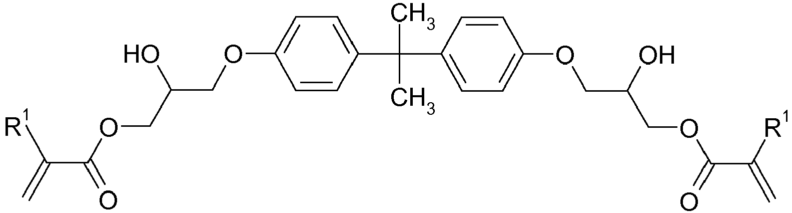 handelt, worin
R¹ Wasserstoff oder Methyl, bevorzugt Wasserstoff
bedeutet.

7. Urethan(meth)acrylate gemäß einem der vorstehenden Ansprüche, **dadurch gekennzeichnet, daß** die Komponente d) ausgewählt ist aus der Gruppe bestehend aus Dimethylolpropionsäure und Dimethylolbuttersäure.

8. Urethan(meth)acrylate gemäß einem der vorstehenden Ansprüche, **dadurch gekennzeichnet, daß** beide Alkylreste der Verbindung (h1) jeweils unabhängig voneinander mindestens sechs Kohlenstoffatome umfassen.

9. Beschichtungsmasse, enthaltend mindestens ein Urethan(meth)acrylat gemäß einem der Ansprüche 1 bis 8 und zusätzlich mindestens ein (Meth)acrylat (B), das mindestens zwei (Meth)acrylatfunktionen und ein mittleres Molekulargewicht bis zu 1000 g/mol aufweist.

10. Beschichtungsmasse gemäß Anspruch 9, **dadurch gekennzeichnet, daß** es sich bei dem (Meth)acrylat (B) um ein (Meth)acrylat von Verbindungen der Formel (VIIIa) bis (VIIId) handelt 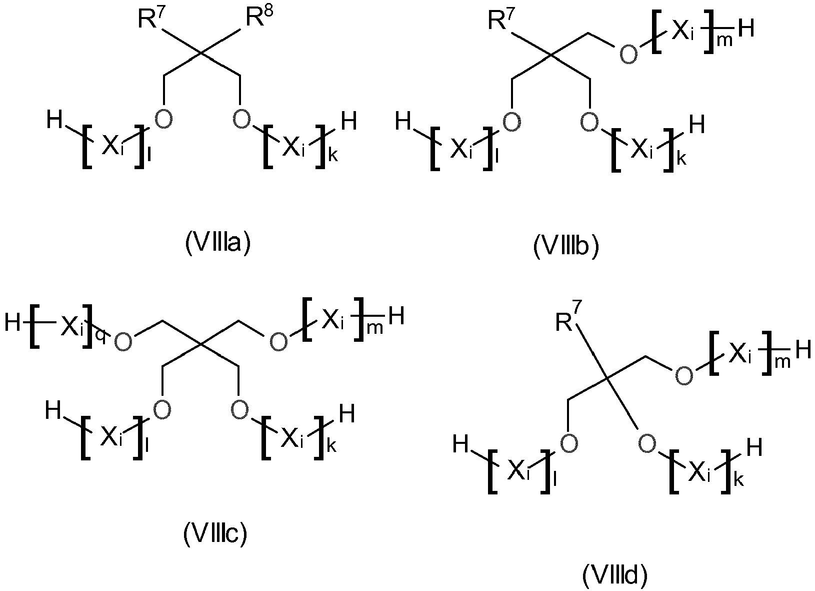 worin
R⁷ und R⁸ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, I, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

11. Substrat, beschichtet mit einem Urethan(meth)acrylat gemäß einem der Ansprüche 1 bis 8 oder einer Beschichtungsmasse gemäß einem der Ansprüche 9 oder 10.

12. Substrat gemäß Anspruch 11, **dadurch gekennzeichnet, daß** es sich um beschichtete Eiche, Fichte, Kiefer, Buche, Ahorn, Kastanie, Platane, Rubinie, Esche, Birke, Pinie, Ulme, Nußbaum oder Macore handelt.

13. Verfahren zum Beschichten von Substraten, **dadurch gekennzeichnet, daß** man ein Urethan(meth)acrylat gemäß einem der Ansprüche 1 bis 8 oder eine Beschichtungsmasse gemäß einem der Ansprüche 9 oder 10 auf ein Substrat aufbringt, anschließend trocknet und strahlungshärtet.

14. Verfahren gemäß Anspruch 13, **dadurch gekennzeichnet, daß** es sich bei dem Substrat um beschichtete Eiche, Fichte, Kiefer, Buche, Ahorn, Kastanie, Platane, Rubinie, Esche, Birke, Pinie Ulme, Nußbaum oder Macore handelt.

15. Verwendung von Urethan(meth)acrylaten gemäß einem der Ansprüche 1 bis 8 als Beschichtungsmasse oder in Beschichtungsmassen.

16. Verwendung gemäß Anspruch 15, **dadurch gekennzeichnet, daß** mit der Beschichtungsmasse Holz, Papier, Textil, Leder, Vlies, Kunststoffoberflächen, Glas, Keramik, mineralischen Baustoffen, Metallen, beschichtete Metalle, Papier, Pappe oder Karton beschichtet werden.

17. Verwendung gemäß Anspruch 15, **dadurch gekennzeichnet, daß** mit der Beschichtungsmasse Eiche, Fichte, Kiefer, Buche, Ahorn, Kastanie, Platane, Rubinie, Esche, Birke, Pinie, Ulme, Nußbaum, Macore oder Kork beschichtet werden.

## Claims

1. A urethane (meth)acrylate (A) substantially synthesized from
(a) at least one (cyclo)aliphatic di- and/or polyisocyanate,
(b1) at least one (cyclo)aliphatic diol having a molar mass of less than 700 g/mol,
(b2) at least one polyesterdiol having a weight-average molar mass Mw of 700 to 2000 and preferably an acid number to DIN 53240 of not more than 20 mg KOH/g,
(c) at least one compound (c) having at least one isocyanate-reactive group and at least one radically polymerizable unsaturated group,
(d) at least one compound which has at least one isocyanate-reactive group and at least one acid group,
(e) at least one base for at least partial neutralization of the acid groups of component (d), being different from components (h1) and (h2),
(f) optionally at least one monoalcohol, having precisely one hydroxyl function,
(g) optionally at least one monofunctional polyalkylene oxide polyether alcohol,
(h1) at least one amine which is substituted by one or two hydrocarbon radicals, in which the hydrocarbon radicals together have at least 12 carbon atoms, and
(h2) optionally at least one compound having at least two primary and/or secondary amino groups.

2. The urethane (meth)acrylate according to claim 1, wherein component (a) is a mixture of an aliphatic di- and/or polyisocyanate (a1) and a cycloaliphatic di- and/or polyisocyanate (a2).

3. The urethane (meth)acrylate according to claim 1 or 2, wherein component (b1) is selected from the group consisting of ethylene glycol, 1,2-propanediol, 1,3-propanediol, 2,2-dimethyl-1,2-ethanediol, 2,2-dimethyl-1,3-propanediol (neopentyl glycol), 1,2-butanediol, 1,3-butanediol, 1,4-butanediol, 1,6-hexanediol, and diethylene glycol.

4. The urethane (meth)acrylate according to any of the preceding claims, wherein component (b2) is a polyesterdiol synthesized at least partly from aliphatic diol and/or dicarboxylic acid building blocks.

5. The urethane (meth)acrylate according to any of claims 1 to 4, wherein component (c) is selected from the group consisting of 2-hydroxyethyl acrylate, 2-hydroxyethyl methacrylate, 2- or 3-hydroxypropyl acrylate, and 1,4-butanediol monoacrylate, glyceryl 1,2- or 1,3-diacrylate, trimethylolpropane diacrylate, pentaerythrityl triacrylate, ditrimethylolpropane triacrylate, and dipentaerythrityl pentaacrylate.

6. The urethane (meth)acrylate according to any of claims 1 to 4, wherein compound (c) is an epoxy (meth)acrylate of the formula 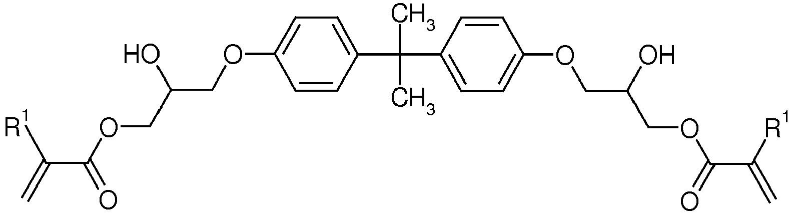 in which
R¹ is hydrogen or methyl, preferably hydrogen.

7. The urethane (meth)acrylate according to any of the preceding claims, wherein component d) is selected from the group consisting of dimethylolpropionic acid and dimethylolbutyric acid.

8. The urethane (meth)acrylate according to any of the preceding claims, wherein both alkyl radicals of the compound (h1) each independently of one another comprise at least six carbon atoms.

9. A coating material comprising at least one urethane (meth)acrylate according to any of claims 1 to 8 and additionally at least one (meth)acrylate (B) which has at least two (meth)acrylate functions and an average molecular weight of up to 1000 g/mol.

10. The coating material according to claim 9, wherein the (meth)acrylate (B) is a (meth)acrylate of compounds of the formula (VIIIa) to (VIIId) 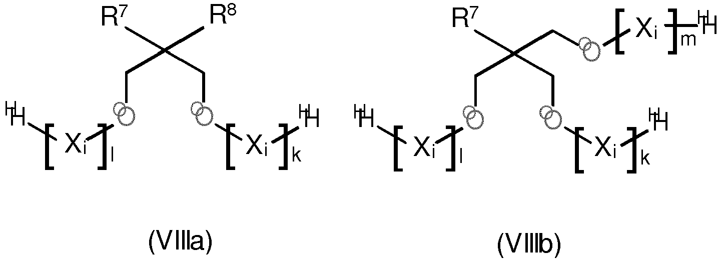 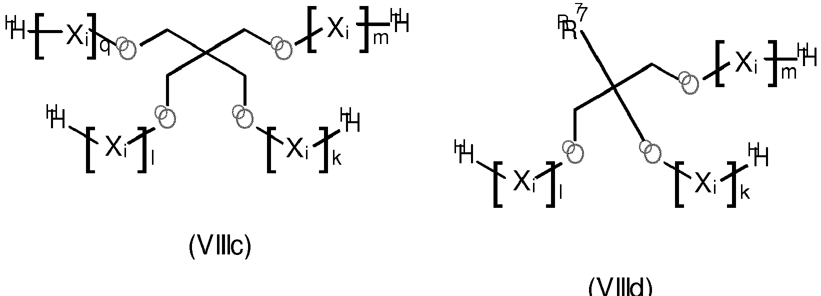 in which
R⁷ and R⁸ independently of one another are hydrogen or optionally aryl-, alkyl-, aryloxy-, alkyloxy-, heteroatom- and/or heterocycle-substituted C₁-C₁₈ alkyl,
k, 1, m, q independently of one another are each an integer from 1 to 10, preferably 1 to 5, and more preferably 1 to 3, and
each Xᵢ for i = 1 to k, 1 to 1, 1 to m, and 1 to q may be selected independently of one another from the group -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, and -CHPh-CH₂-O-, preferably from the group -CH₂-CH₂-O-, -CH₂-CH(CH₃)-0-, and -CH(CH₃)-CH₂-O-, and more preferably -CH₂-CH₂-O-,
in which Ph is phenyl and Vin is vinyl.

11. A substrate coated with a urethane (meth)acrylate according to any of claims 1 to 8 or with a coating material according to either of claims 9 and 10.

12. The substrate according to claim 11, comprising coated oak, spruce, pine, beech, maple, chestnut, plane, robinia, ash, birch, stone pine, elm, walnut, or macore.

13. A method for coating a substrate, wherein a urethane (meth)acrylate according to any of claims 1 to 8 or a coating material according to either of claims 9 and 10 is applied to a substrate, subsequently dried and radiation-cured.

14. The method according to claim 13, wherein said substrate comprises coated oak, spruce, pine, beech, maple, chestnut, plane, robinia, ash, birch, stone pine, elm, walnut, or macore.

15. The use of a urethane (meth)acrylate according to claims 1 to 8 as a coating material or in a coating material.

16. The use according to claim 15, wherein the coating material is used to coat wood, paper, textile, leather, nonwoven, plastics surfaces, glass, ceramic, mineral building materials, metals, coated metals, paper, paperboard, or cardboard.

17. The use according to claim 15, wherein the coating material is used to coat oak, spruce, pine, beech, maple, chestnut, plane, robinia, ash, birch, stone pine, elm, walnut, macore, or cork.

## Revendications

1. Uréthane-(méth)acrylates (A), essentiellement constitués par
(a) au moins un diisocyanate et/ou polyisocyanate (cyclo)aliphatique,
(b1) au moins un diol (cyclo)aliphatique, présentant une masse molaire inférieure à 700 g/mole,
(b2) au moins un polyesterdiol présentant une masse molaire pondérale moyenne Mw de 700 à 2000 et de préférence un indice d'acide selon la norme DIN 53240 qui n'est pas supérieur à 20 mg de KOH/g,
(c) au moins un composé (c) présentant au moins un groupe réactif par rapport à isocyanate et au moins un groupe insaturé polymérisable par voie radicalaire,
(d) au moins un composé qui présente au moins un groupe réactif par rapport à isocyanate et au moins un groupe acide,
(e) au moins une base pour une neutralisation au moins partielle des groupes acides du composant (d), qui est différente des composants (h1) et (h2),
(f) éventuellement au moins un monoalcool qui présente exactement une fonction hydroxy,
(g) éventuellement au moins un poly(oxyde d'alkylène)-polyétheralcool monofonctionnel,
(h1) au moins une amine substituée par un ou deux radicaux hydrocarbonés, dans laquelle les radicaux hydrocarbonés présentent ensemble au moins 12 atomes de carbone ainsi que
(h2) éventuellement au moins un composé comprenant au moins deux groupes amino primaire et/ou secondaire.

2. Uréthane-(méth)acrylates selon la revendication 1, **caractérisés en ce qu'**il s'agit, pour le composant (a), d'un mélange d'un diisocyanate et/ou d'un polyisocyanate aliphatique (a1) et d'un diisocyanate et/ou d'un polyisocyanate cycloaliphatique (a2).

3. Uréthane-(méth)acrylates selon la revendication 1 ou 2, **caractérisés en ce que** le composant (b1) est choisi dans le groupe constitué par l'éthylèneglycol, le 1,2-propanediol, le 1,3-propanediol, le 2,2-diméthyl-1,2-éthanediol, le 2,2-diméthyl-1,3-propanediol (néopentylglycol), le 1,2-butanediol, le 1,3-butanediol, le 1,4-butanediol, le 1,6-hexanediol et le diéthylèneglycol.

4. Uréthane-(méth)acrylates selon l'une quelconque des revendications précédentes, **caractérisés en ce qu'**il s'agit, pour le composant (b2), d'un polyesterdiol, qui est constitué au moins partiellement par des éléments diol aliphatique et/ou des éléments acide dicarboxylique aliphatique.

5. Uréthane-(méth)acrylates selon l'une quelconque des revendications 1 à 4, **caractérisés en ce que** le composant (c) est choisi dans le groupe constitué par l'acrylate de 2-hydroxyéthyle, le méthacrylate de 2-hydroxyéthyle, l'acrylate de 2-hydroxypropyle ou de 3-hydroxypropyle, le monoacrylate de 1,4-butanediol, le 1,2-diacrylate ou le 1,3-diacrylate de glycérol, le diacrylate de triméthylolpropane, le triacrylate de pentaérythritol, le triacrylate de ditriméthylolpropane et le pentaacrylate de dipentaérythritol.

6. Uréthane-(méth)acrylates selon l'une quelconque des revendications 1 à 4, **caractérisés en ce qu'**il s'agit, pour le composé (c), d'un époxy(méth)acrylate de formule 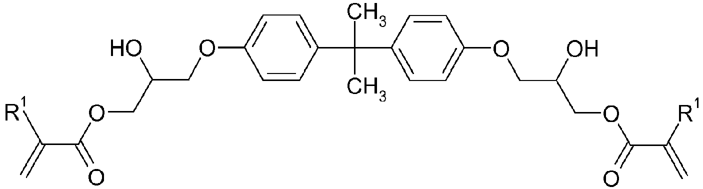 dans laquelle
R¹ signifie hydrogène ou méthyle, de préférence hydrogène.

7. Uréthane-(méth)acrylates selon l'une quelconque des revendications précédentes, **caractérisés en ce que** le composant d) est choisi dans le groupe constitué par l'acide diméthylolpropionique et l'acide diméthylolbutyrique.

8. Uréthane-(méth)acrylates selon l'une quelconque des revendications précédentes, **caractérisés en ce que** les deux radicaux alkyle du composé (h1), à chaque fois indépendamment l'un de l'autre, comprennent au moins six atomes de carbone.

9. Masse de revêtements contenant au moins un uréthane-(méth)acrylate selon l'une quelconque des revendications 1 à 8 et en outre au moins un (méth)acrylate (B), qui présente au moins deux fonctions (méth)acrylate et un poids moléculaire moyen de jusqu'à 1000 g/mole.

10. Masse de revêtement selon la revendication 9, **caractérisée en ce qu'**il s'agit, pour le composant (B), d'un (méth)acrylate de composés des formules (VIIIa) à (VIIId), 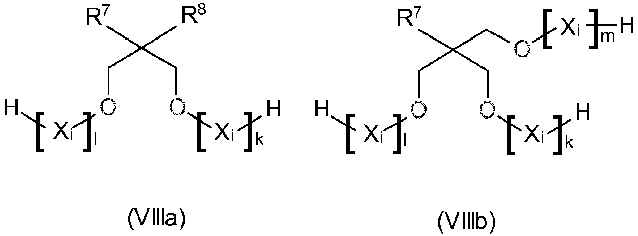 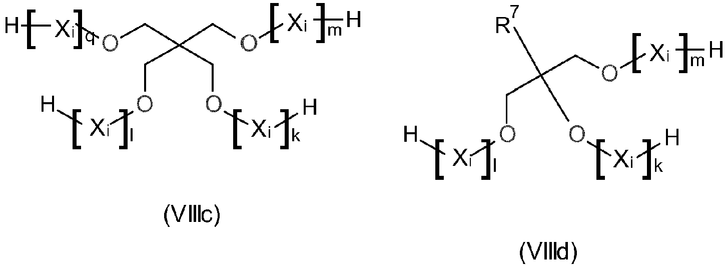 dans lesquelles
R⁷ et R⁸ représentent, indépendamment l'un de l'autre, hydrogène ; ou C₁-C₁₈-alkyle le cas échéant substitué par aryle, alkyle, aryloxy, alkyloxy, des hétéroatomes et/ou des hétérocycles,
k, l, m, q représentent, indépendamment les uns des autres, à chaque fois un nombre entier de 1 à 10, de préférence de 1 à 5 et de manière particulièrement préférée de 1 à 3 et
chaque Xᵢ, pour i = 1 à k, 1 à 1, 1 à m et 1 à q, peut être choisi, indépendamment les uns des autres, dans le groupe formé par -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVirl-O-, -CHVin-CH₂-O-, -CH₂-CHPh-O- et -CHPh-CH₂-O-, de préférence dans le groupe -CH₂-CH₂-O-, -CH₂-CH(CH₃)-O-et -CH(CH₃)-CH₂-O-, et de manière particulièrement préférée -CH₂-CH₂-O-, Ph représentant phényle et Vin représentant vinyle.

11. Substrat, revêtu par un uréthane-(méth)acrylate selon l'une quelconque des revendications 1 à 8 ou par une masse de revêtement selon l'une quelconque des revendications 9 ou 10.

12. Substrat selon la revendication 11, **caractérisé en ce qu'**il s'agit de chêne, d'épicéa, de pin, de hêtre, d'érable, de marronnier, de platane, de robinier, de frêne, de bouleau, de pin parasol, d'orme, de noyer et de makoré, revêtus.

13. Procédé pour le revêtement de substrats, **caractérisé en ce qu'**on applique un uréthane-(méth)acrylate selon l'une quelconque des revendications 1 à 8 ou une masse de revêtement selon l'une quelconque des revendications 9 ou 10 sur un substrat, on le sèche ensuite et le durcit par un rayonnement.

14. Procédé selon la revendication 13, **caractérisé en ce qu'**il s'agit, pour le substrat, de chêne, d'épicéa, de pin, de hêtre, d'érable, de marronnier, de platane, de robinier, de frêne, de bouleau, de pin parasol, d'orme, de noyer et de makoré, revêtus.

15. Utilisation d'uréthane-(méth)acrylates selon l'une quelconque des revendications 1 à 8 comme masse de revêtement ou dans des masses de revêtement.

16. Utilisation selon la revendication 15, **caractérisée en ce qu'**on revêt du bois, du papier, du textile, du cuir, du non-tissé, des surfaces en matériau synthétique, du verre, de la céramique, des matériaux de construction minéraux, des métaux, des métaux revêtus, du papier, du carton-pâte ou du carton par la masse de revêtement.

17. Utilisation selon la revendication 15, **caractérisée en ce qu'**on revêt du chêne, de l'épicéa, du pin, du hêtre, de l'érable, du marronnier, du platane, du robinier, du frêne, du bouleau, du pin parasol, de l'orme, du noyer, du makoré ou du liège par la masse de revêtement.
